# EUROPÄISCHE PATENTANMELDUNG

(11) **EP 4 729 304 A1**
(43) Veröffentlichungstag der Anmeldung: **22.04.2026**
(21) Anmeldenummer: 25207956.1
(22) Anmeldetag: 10.10.2025
(51) Int. Cl.: B44C 5/04, B08B 7/00, B32B 37/26

(54) **VERFAHREN ZUR HERSTELLUNG EINES BAUTEILS UND VERWENDUNG EINER FOLIE IN EINEM VERFAHREN ZUR HERSTELLUNG EINES BAUTEILS ZUR REDUKTION VON VERUNREINIGUNGEN**

(30) Priorität: 21.10.2024 DE 102024130615
(71) Anmelder: Pfleiderer Deutschland GmbH, 92318 Neumarkt (DE)
(72) Erfinder: Schrautzer, Dr. Christian, 59759 Arnsberg (DE); Röhr, Peter, 58739 Wickede (DE); Heilf, Thorsten, 59423 Unna (DE)
(74) Vertreter: Von Rohr Patentanwälte Partnerschaft mbB

(57) **Zusammenfassung**

Die Erfindung betrifft ein Verfahren zur Herstellung eines Bauteils (16), vorzugsweise einer Dekorplatte. Erfindungsgemäß umfasst das Verfahren die Schritte:
- Bereitstellen eines Trägers (9);
- Bereitstellen einer Dekorschicht (1), wobei die Dekorschicht eine Deckschicht (2) und eine dekorbildende Schicht (3) aufweist;
- Bereitstellen einer Folie (10), wobei die Folie auf einer Seite, vorzugsweise ausschließlich auf einer Unterseite (11), eine Haftschicht aufweist;
- Anordnen der Dekorschicht auf dem Träger unter Einsatz eines Bindemittels (4);
- Anordnen der Folie auf der Deckschicht derart, dass die Haftschicht der Folie mit der Deckschicht der Dekorschicht in Kontakt kommt, zur Herstellung einer Pressanordnung (8);
- Einbringen dieser Pressanordnung in eine Presse (13), die ein Pressmittel (14) aufweist;
- Verpressen dieser Pressanordnung durch das Pressmittel unter Einwirkung von Druck und Wärmeenergie zu einem Bauteil derart, dass die Folie von der Deckschicht lösbar ist;
- Entfernen der Folie (10) von der Deckschicht, so dass auf der Oberfläche (5) der Deckschicht befindliche Verunreinigungen (21) mittels der Folie reduziert bzw. entfernt werden.

## Beschreibung

Die vorliegende Erfindung betrifft ein Verfahren zur Herstellung eines Bauteils gemäß Anspruch 1. Des Weiteren betrifft die vorliegende Erfindung die Verwendung einer Folie in einem Verfahren zur Herstellung eines Bauteils zur Reduktion von Verunreinigungen gemäß Anspruch 12.

Ein Bauteil im Sinne der vorliegenden Erfindung ist ein aus mehreren Werkstoffschichten aufgebauter, auf zwei gegenüberliegenden Seiten von je einer im Verhältnis zur Dicke deutlich stärker ausgedehnten, vorzugsweise ebenen, Fläche begrenzter, vorzugsweise quaderförmiger, Körper. Es kann sich beispielsweise um eine Holzplatte oder Holzwerkstoffplatte oder ein Laminat, insbesondere ein Hochdrucklaminat, oder eine mit einem Laminat versehene Holzplatte oder eine mit einem Laminat versehene Holzwerkstoffplatte handeln. Im Falle einer dekorativen Holzwerkstoffplatte (mit oder ohne Laminat) spricht man auch von einer Dekorplatte, welche hier besonders bevorzugt ist. Weitere Bezeichnungen gattungsgemäßer Bauteile lauten Verbundplatte, Schichtstoffplatte, HPL-Platte, HPL-Schichtstoff.

Ein Bauteil der in Rede stehenden Art hat, zumindest auf einer Seite, ein dekoratives Erscheinungsbild.

Ein solches Bauteil wird durch Verpressen unter Einwirkung von Druck und Wärmeenergie hergestellt.

Solche Bauteile sind äußerst vielseitig einsetzbar. Häufig finden sie im Möbelbau Verwendung, z. B. für Küchenarbeitsplatten und Möbelteile wie Möbeltüren. Weitere Einsatzmöglichkeiten finden sich in den Bereichen Deckenbekleidungen, bei konstruktiven Einbauten, Innenwandbekleidungen, Unterdecken und im allgemeinen Innenausbau, z. B. für Fensterbänke und Forming-Elemente.

Bauteile der in Rede stehenden Art weisen einen Träger auf. Bei dem Träger kann es sich beispielsweise um eine Spanplatte, hochdichte Faserplatte (Hartfaserplatte, HDF), mitteldichte Faserplatte (MDF), Tischlerplatte, Echtholzplatte, Sperrholzplatte, OSB-Platte oder Dreischichtplatte. Ein solcher Träger kann dann mit einer Dekorschicht direkt beschichtet werden.

Der Träger kann aber auch ein Kraftpapier sein, wodurch ein Laminat als Bauteil hergestellt werden kann. In diesem Fall kann das Bauteil mit einem weiteren Träger, z. B. einer Holzplatte oder Holzwerkstoffplatte, verbunden, insbesondere verpresst, werden. So kann beispielsweise aus einem HPL-Schichtstoff eine Schichtstoffplatte hergestellt werden.

Hochdrucklaminate werden durch das Verpressen von mehreren Werkstoffschichten, vorzugsweise Bahnenmaterial, und Harzen unter hohem Druck und hoher Temperatur hergestellt. Die untersten Schichten umfassen in der Regel mehrere Lagen Kraftpapier, das typischerweise mit Phenolharz imprägniert wird. Diese unteren Schichten sorgen für die Stabilität und Dicke des Hochdrucklaminats. Auf diese verstärkenden Schichten folgt eine Schicht von dekorativem Papier, welches bedruckt sein kann und/oder eine Struktur aufweist. Das dekorative Papier ist häufig ebenfalls mit einem Harz imprägniert. Der Druck, mit dem die Schichten verpresst werden, beträgt bei diskontinuierlichen Pressverfahren üblicherweise über 50 bar und die Temperatur im Herstellprozess liegt über 120 Grad Celsius. Der Vorgang des diskontinuierlichen Verpressens dauert normalerweise etwa 30 bis 50 Minuten. Bei kontinuierlichen Pressverfahren beträgt der Druck, mit dem die Schichten verpresst werden, üblicherweise über 50 bar und die Temperatur im Herstellprozess liegt bei etwa 190 Grad Celsius. Der Vorgang des kontinuierlichen Verpressens dauert normalerweise etwa 30 Sekunden.

Im Gegensatz zu Schichtstoffplatten wird bei direktbeschichteten Trägern die Dekorschicht direkt auf den Träger aufgebracht, ohne dass vor der Direktbeschichtung ein Laminat gebildet wird. Die Dekorschicht umfasst in der Regel ein imprägniertes, dekoratives Papier, das mit einem härtbaren Aminoplastharz (Harnstoff- oder Melaminharz) als Bindemittel imprägniert ist. Die Dekorschicht wird mit dem Träger verpresst. Der Druck im Pressprozess beträgt üblicherweise zwischen 20 und 40 bar und die Temperatur liegt normalerweise um die 200 Grad Celsius. Das Verpressen erfolgt in einer Presse, woraus eine irreversible Aushärtung der Imprägnate bzw. Bindemittel und die Verbindung mit dem Träger resultiert - ohne Zugabe eines zusätzlichen Klebstoffes.

Mit Hilfe dieser Verfahren lassen sich Bauteile, insbesondere Dekorplatten, mit vielfältigen Oberflächen in verschiedenen Designs, Farben und Oberflächen-Strukturen erzeugen.

Die Oberflächen-Struktur solcher Bauteile kann dabei durch ein Pressmittel (z.B. ein Pressblech oder im Falle von kontinuierlichen Pressen durch ein Pressband) erzeugt werden. Hierbei handelt es sich um speziell angefertigte Strukturgeber, die häufig aus Edelstahl hergestellt werden. Aber nicht nur das Pressmittel hat einen Einfluss auf die Struktur der Oberfläche, sondern auch Papiere oder Folien, die vor und/oder während des Verpressens zum Einsatz kommen.

So ist es beispielsweise aus der EP 0 216 269 A2 bekannt, auf eine Unterlage eine flüssige, durch Strahlung polymerisierbare Kunstharzschicht aufzubringen. Die Unterlage kann ein Dekorpapier sein, das mit einem Aminoplast-Harz imprägniert ist. Auf die flüssige Kunstharzschicht wird eine Folie mit rauer Oberflächenstruktur aufgebracht. Die raue Oberflächenstruktur der Folie wird auf die Oberfläche der flüssigen Kunstharzschicht übertragen, welche dann die Oberflächenstruktur der Folie annimmt und eine matte Oberfläche erhält. Anschließend wird die flüssige Kunstharzschicht unter der Folie durch Strahlung ausgehärtet. Danach können die Unterlage, die darauf befindliche, ausgehärtete Kunstharzschicht und die darauf befindliche Folie mit einer Kernschicht miteinander verpresst werden. Anschließend kann die Folie entfernt werden.

Nachteilig an solchen Verfahren ist es unter anderem, dass sie hohe Anforderungen an die Haftung zwischen der Folie bzw. dem Strukturgeber und der flüssigen Schicht stellen - sie darf weder zu schwach noch zu stark sein.

Die WO 96/11118 A1 offenbart einen mehrschichtigen Kunststoff-Papierverbund in Folienform, der aus einer Papierschicht, einer Polypropylenschicht sowie einer Polyesterschicht besteht, wobei diese einzelnen Schichten mittels eines nichtthermoplastischen Klebers verbunden sind. Der Kunststoff-Papierverbund wird zur Herstellung witterungsbeständiger Schichtpressstoffplatten verwendet, wobei für den Witterungsschutz eine Acrylharzschicht eingesetzt wird. Dazu wird zunächst der Kunststoff-Papierverbund gebildet. Dann wird ein Stapel aus einer Vielzahl von mit Kunstharzen imprägnierten Papierbahnen und einer mit Melaminharz imprägnierten Dekorpapierlage gebildet. Danach wird die Dekorpapierlage mit einer Acrylharzschicht versehen. Anschließend werden der Kunststoff-Papierverbund und der Stapel zu einer Schichtpressstoffplatte verpresst, so dass die Kunstharze der Papierbahnen aushärten und gleichzeitig der Kunststoff-Papierverbund über die Acrylharzschicht an der Dekorpapierlage anhaftet und an dieser bleibend für die weiteren Verarbeitungsschritte fixiert wird. Während des Pressvorgangs dient der Kunststoff-Papierverbund als Strukturgeber für die Oberflächenbeschaffenheit der Dekorpapierlage, so dass der Einsatz zusätzlicher Strukturgeber entfallen kann. Die Strukturgebung erfolgt durch die Dicke und Rauigkeit der Papierschicht des Kunststoff-Papierverbunds sowie deren Faserung. Nach dem Pressvorgang wird die Schichtpressstoffplatte dann auf Raumtemperatur gekühlt, besäumt, geschliffen und auf das gewünschte Format zugeschnitten. Bei der weiteren Verwendung der Schichtpressstoffplatte wird der Kunststoff-Papierverbund von der Acrylharzschicht abgezogen.

Mit der vorliegenden Erfindung sollen a) die Strukturgebung durch eine auf eine flüssige Schicht aufgebrachte Folie und dem Aushärten der mit der Folie versehenen flüssigen Schicht vor dem Verpressen mit einem Träger und b) die Strukturgebung durch eine Folie auf eine Dekorschicht während des Verpressens mit einem Träger vermieden werden.

Aus der Praxis ist bekannt, dass wärmehärtende Bindemittel verwendet werden, wobei deren vollständige Aushärtung erst in der Presse erfolgt. Etwaige Verunreinigungen können also durch das beim Pressen zumindest teilweise noch flüssige Bindemittel eingeschlossen und kaschiert werden.

Verunreinigungen im Sinne der vorliegenden Erfindung sind unerwünschte Defizite an bzw. auf der Oberfläche des Bauteils. Solche Verunreinigungen können beispielsweise durch ein Bindemittel, insbesondere ein Melaminharz, entstehen. Eine Möglichkeit von Verunreinigungen kann während des bzw. durch den Pressprozess(es) auftreten, wobei Bindemittel von der mit Bindemittel getränkten Schicht durch eine Deckschicht an die Oberfläche gelangen kann. Dieses Bindemittel härtet dann an der Oberfläche der Deckschicht aus und führt zu unerwünschten Defiziten. Eine weitere Möglichkeit betrifft am Pressblech bzw. am Pressband vorhandene Bindemittel-Rückstände, die von vorherigen Pressprozessen stammen. Diese Rückstände werden durch das Pressblech bzw. das Pressband auf die Oberfläche der Deckschicht gepresst. Eine weitere Möglichkeit der Verunreinigung sind Partikel aus der Umgebungsluft, die rund um das Pressmittel bzw. in der gesamten Prozess-Umgebung schweben und so auf die Oberfläche der Deckschicht gelangen können. Dies können unter anderem Staub und kleine feste Partikel wie Melaminharzpartikel sein, die aus der Umgebungsluft oder durch Produktionsprozesse verursachten Abrieb stammen. Des Weiteren können auch noch Verunreinigungen durch eine ungewollte chemische Reaktion während des Pressprozesses entstehen. Darüber hinaus sind weitere Quellen von Verunreinigungen möglich (beispielsweise durch Abrieb, Absplitterung). Außerdem können Verunreinigungen auch bereits vor Beginn des Verfahrens auf den beim Verfahren eingesetzten Herstellungskomponenten vorhanden sein.

Mittlerweile werden allerdings vermehrt Verfahren eingesetzt, bei denen die Oberflächen-Struktur der Deckschicht bereits vor dem Pressprozess vollständig oder teilweise ausgehärtet ist und sich die Struktur schon vollständig oder teilweise gebildet hat. Bei diesen Prozessen ist eine Kaschierung der Verunreinigungen nicht möglich, da Verunreinigungen nicht mehr durch das flüssige Bindemittel eingeschlossen und kaschiert werden können. Selbst kleinste Verunreinigungen führen so zu einem Fehler im Endprodukt.

Hinzu kommt, dass die Fehlertoleranz bei hochwertigen Bauteilen kleiner ist.

Um dem Problem der Verunreinigungen zu begegnen, sind aus der Praxis zwei Lösungsansätze bekannt.

Zum einen werden im Pressprozess Folien oder Trennpapiere zur Abschirmung der Oberfläche der Deckschicht eingesetzt. Wie bereits beschrieben, sind für die vorliegende Erfindung nur Folien oder Trennpapiere relevant, die die Oberflächen-Struktur des Endprodukts nicht bzw. nur marginal beeinflussen. Je früher diese Folien bzw. Trennpapiere aufgebracht werden, um so mehr Fehler können vermieden werden. Diese Folien oder Trennpapiere können allerdings keine bzw. fast keine Verunreinigungen aufnehmen. Somit schützen diese Folien oder Trennpapiere lediglich gegen Verunreinigungen durch Rückstände am Pressblech bzw. Pressband und durch Verunreinigungen, die aus der Umgebungsluft stammen, indem die Folien oder Trennpapiere verhindern, dass solche Verunreinigungen überhaupt auf die Deckschicht gelangen. Etwaige Verunreinigungen, die aus der Deckschicht bzw. durch die Deckschicht hindurch an die Oberfläche der Deckschicht gelangen oder durch chemische Reaktionen an der Oberfläche der Deckschicht entstehen, können von den Folien oder Trennpapieren nicht aufgenommen bzw. kaschiert werden.

Zum anderen werden im Herstellungsprozess saugende Papiere verwendet, die eine offenporige Oberfläche aufweisen. Durch die Ausgestaltung der Oberfläche der Papiere können Verunreinigungen aufgenommen werden. Der Nachteil dieser saugenden Papiere ist allerdings, dass sie durch die Papierstruktur die Struktur des Endprodukts zusätzlich zum strukturgebenden Pressblech bzw. Pressband ungewollt verändern. Da der aktuelle Trend immer mehr in Richtung glatter Oberflächen-Strukturen geht, ist dieser Lösungsansatz eher hinderlich.

Der vorliegenden Erfindung liegt daher die technische Aufgabe zugrunde, eine Lösung anzugeben, durch die eine Reduzierung der Verunreinigungen auf der Deckschicht des Bauteils erzielt werden kann, wobei gleichzeitig der Einfluss eben dieser Lösung auf die Oberflächen-Struktur des Bauteils minimiert wird. Insbesondere sollen die Nachteile des Standes der Technik vermieden oder aber zumindest im Wesentlichen vermindert werden.

Die vorgenannte Aufgabe wird erfindungsgemäß durch ein Verfahren zur Herstellung eines Bauteils, vorzugsweise einer Dekorplatte, nach Anspruch 1 gelöst.

Das erfindungsgemäße Verfahren umfasst die folgenden Schritte:
- Bereitstellen eines Trägers;
- Bereitstellen einer Dekorschicht, wobei die Dekorschicht eine Deckschicht und eine dekorbildende Schicht aufweist;
- Bereitstellen einer Folie, wobei die Folie auf einer Seite, vorzugsweise ausschließlich auf einer Unterseite, eine Haftschicht aufweist;
- Anordnen der Dekorschicht auf dem Träger unter Einsatz eines Bindemittels;
- Anordnen der Folie auf der Deckschicht derart, dass die Haftschicht der Folie mit der Deckschicht der Dekorschicht in Kontakt kommt, zur Herstellung einer Pressanordnung;
- Einbringen dieser Pressanordnung in eine Presse, die ein Pressmittel aufweist;
- Verpressen dieser Pressanordnung durch das Pressmittel unter Einwirkung von Druck und Wärmeenergie zu einem Bauteil derart, dass die Folie von der Deckschicht lösbar ist;
- Entfernen der Folie von der Deckschicht, so dass auf der Oberfläche der Deckschicht befindliche Verunreinigungen mittels der Folie reduziert bzw. entfernt werden.

Ein Träger im Sinne der vorliegenden Erfindung ist ein Basiswerkstoff und/oder ein grundlegendes Element, das als strukturelle Grundlage für das Aufbringen von weiteren Schichten dient. Der Träger ermöglicht die Haftung und Stabilität der Dekorschicht, während er die mechanischen Anforderungen des gesamten Systems unterstützt. Bei dem Träger kann es sich beispielsweise um eine Spanplatte, hochdichte Faserplatte (Hartfaserplatte, HDF), mitteldichte Faserplatte (MDF), Tischlerplatte, Echtholzplatte, Sperrholzplatte, OSB-Platte, Dreischichtplatte oder ein Kraftpapier handeln.

Eine dekorbildende Schicht im Sinne der vorliegenden Erfindung stellt vorzugsweise eine farbige Verzierung oder ein farbiges Muster dar, bewirkt also einen dekorativen optischen Eindruck.

Eine Haftschicht im Sinne der vorliegenden Erfindung ist eine modifizierte und/oder aufgebrachte Schicht, die die Adhäsion zwischen zwei Materialien verbessert. Die Haftschicht kann entweder eine physische Zwischenschicht (wie beispielsweise eine spezielle Klebstoff-Schicht) oder eine behandelte Oberfläche (beispielsweise Ätzen oder Corona-Behandlung) sein, die die Bindungseigenschaften optimiert bzw. verändert.

Vorzugsweise weist die Folie nur auf der Seite eine Haftschicht auf, an welcher sie in Kontakt mit der Deckschicht steht. In anderen Ausführungsformen ist es jedoch auch möglich, dass die Folie auf beiden Seiten eine Haftschicht aufweist. So können Verunreinigungen, die am Pressmittel anhaften, entfernt werden. Vorzugsweise weist die Folie dann - im Vergleich zur Verunreinigung - eine besonders geringe Adhäsion zu dem Material des Pressmittels auf.

Bei einer bevorzugten Variante des erfindungsgemäßen Verfahrens ist die dekorbildende Schicht mit dem Bindemittel versehen. In diesem Fall wird die Dekorschicht auf dem Träger derart angeordnet, dass das Bindemittel mit dem Träger in Kontakt kommt.

Bei einer alternativen bevorzugten Variante des erfindungsgemäßen Verfahrens wird eine separate Bindemittelschicht mit dem Bindemittel und einem Bindemittelträger bereitgestellt. In diesem Fall wird die Dekorschicht auf dem Träger derart angeordnet, dass die separate Bindemittelschicht auf dem Träger und die Dekorschicht auf der separaten Bindemittelschicht angeordnet wird.

Bevorzugt bildet die Deckschicht einen Lack. Dadurch ist die Oberfläche des Bauteils zusätzlich geschützt vor mechanischen Einflüssen, wie Kratzern und Abrieb, sowie vor Feuchtigkeit, Chemikalien oder UV-Strahlung. Gleichzeitig wird das Erscheinungsbild durch Glanz sowie Farbechtheit verbessert.

Vorzugsweise ist die Deckschicht vor dem Verpressen und vor dem Anordnen der Folie auf der Deckschicht teilweise oder vollständig ausgehärtet. Dadurch ergibt sich eine höhere Prozessstabilität, wodurch Beschädigungen und Verformungen während des Verpressens und/oder Anordnens der Folie minimiert werden. Des Weiteren ist eine bereits teilweise oder vollständig ausgehärtete Deckschicht einer verbesserten Oberflächenqualität zuträglich, da durch das Aushärten vor dem Verpressen und vor dem Anordnen der Folie auf der Deckschicht die Gefahr von Oberflächendefekten wie Blasenbildung oder Unebenheiten reduziert wird. Durch die bereits teilweise oder vollständig ausgehärtete Deckschicht ergeben sich kürzere Zykluszeiten. Darüber hinaus ist die Schichtdicke und -qualität bereits vor dem Verpressen bekannt, was zu einer präziseren Endoberfläche führt.

Vorzugsweise weist die Deckschicht bereits vor dem Anordnen der Folie auf der Deckschicht und vor dem Verpressen eine Oberfläche mit einer visuell und/oder haptisch wahrnehmbaren Struktur auf.

Eine Struktur im Sinne der vorliegenden Erfindung beschreibt vorzugsweise die visuelle und/oder haptische Beschaffenheit einer Oberfläche, die durch natürliche oder künstliche Merkmale wie Muster, Texturen oder Reflexionseigenschaften geprägt ist. Sie kann feine Details wie eine Holz- oder Steinmaserung umfassen oder durch Eigenschaften wie Glanz, Mattheit oder Glätte definiert sein, die das Erscheinungsbild und die Wahrnehmung der Oberfläche beeinflussen.

Besonders bevorzugt ist es, wenn die Deckschicht durch ein Excimer-Verfahren hergestellt ist. Dabei kann das Aushärten der Deckschicht mittels einer monochromatischen UV-Strahlung auf Basis von Excimer-Molekülen erfolgen. Auf die Verwendung von externen Mattierungsmitteln wie einer Mattfolie und auf die Verwendung von internen Mattierungsmitteln wie Silikaten kann verzichtet werden. Durch ein Herstellen der Deckschicht mittels eines Excimer-Verfahrens weist die Deckschicht eine matte Oberfläche und eine hohe mechanische Beständigkeit auf. Außerdem ermöglicht eine Herstellung der Deckschicht mittels eines Excimer-Verfahrens eine präzise Kontrolle des Glanzgrades, die Reduzierung der Herstellungskosten und/oder eine effizientere Nutzung von Anlagenkapazitäten.

In einer bevorzugten Ausführungsform ist das Bindemittel vor dem Verpressen nur teilweise, vorzugsweise nicht vollständig, ausgehärtet. Dadurch ergibt sich der Vorteil, dass die Zeit des Pressprozesses verkürzt wird.

Besonders bevorzugt weist die dekorbildende Schicht ein Bahnenmaterial, vorzugsweise ein Papier, Vlies oder Gewebe, auf oder besteht daraus.

Ein Bahnenmaterial im Sinne der vorliegenden Erfindung ist ein flächiges Material, das in kontinuierlicher Form vorliegt. In der Regel wird ein solches Material in Rollen bereitgestellt und kann gleichmäßig - also ohne Schnittkanten oder Übergänge - aufgebracht werden.

Es hat sich als vorteilhaft erwiesen, wenn die dekorbildende Schicht farbig ausgestaltet und/oder bedruckt ist. Dies geschieht vorzugsweise vor dem Pressprozess, wodurch die Fehleranfälligkeit im Prozess verringert wird durch die Verringerung der Verarbeitungsschritte. Eine Qualitätskontrolle ist somit schon vorher möglich, wodurch fehlerhaftes Material im Voraus erkannt und entsorgt werden kann.

Bevorzugt weist die separate Bindemittelschicht ein mit dem Bindemittel, vorzugsweise Melaminharz, getränktes Bahnenmaterial, vorzugsweise aus Papier, Vlies oder Gewebe, auf oder besteht daraus. Der Vorteil einer solchen separaten Bindemittelschicht liegt darin, dass so bereits teilweise oder vollständig ausgehärtete Deckschichten eingekauft bzw. verwendet werden können und so schnell mit der separaten Bindemittelschicht verpresst werden können.

Vorzugsweise wird die Folie auf die teilweise oder vollständig ausgehärtete Deckschicht (nicht auf eine flüssige Deckschicht) angeordnet.

In einer weiteren bevorzugten Ausführungsform weist die Folie eine Oberfläche auf, die derart ausgebildet ist, dass die Folie, insbesondere beim Verpressen der Pressanordnung und/oder vor dem Verpressen der Pressanordnung, eine Oberseite bzw. Oberfläche der Deckschicht strukturmäßig im Wesentlichen unverändert lässt.

Dadurch lassen sich relativ glatte Oberflächen produzieren. Dies führt dazu, dass die bereits teilweise oder vollständig ausgehärtete Oberfläche der Deckschicht nicht durch die Struktur der Folie beeinflusst wird. Mit anderen Worten dient die Folie nicht als (maßgeblicher) Strukturgeber (haptisch und/oder optisch) für die Deckschicht bzw. Dekorschicht.

Besonders bevorzugt ist die Haftschicht der Folie derart ausgestaltet, dass sie eine stärkere Adhäsion zu einer auf der Deckschicht befindlichen Verunreinigung als zu der Deckschicht aufweist. Dies bietet den Vorteil, dass so Verunreinigungen auf der Oberfläche der Deckschicht mittels der Folie entfernt werden können. Die Folie schützt vor Verunreinigungen, die während des Pressprozesses entstehen. Dies gilt insbesondere für Bindemittel, das von unteren Schichten auf die Oberfläche gelangt. Diese Verunreinigungen haften dann - aufgrund der höheren Adhäsion der Folie zur Verunreinigung statt zur Deckschicht - an der Folie und können entfernt werden. Des Weiteren können so auch Verunreinigungen, die durch ungewollte chemische Prozesse während des Pressprozesses entstehen, von der Oberfläche der Deckschicht mit Hilfe der Folie entfernt werden.

Ganz besonders bevorzugt ist die Haftschicht der Folie derart ausgestaltet, dass sie eine stärkere Adhäsion zu auf der Deckschicht befindlichen, durch das Bindemittel entstandenen Verunreinigungen als zu der Deckschicht aufweist.

Sehr bevorzugt ist die Haftschicht der Folie derart ausgestaltet, dass sie eine stärkere Adhäsion zu auf der Deckschicht befindlichem, unvollständig gehärtetem Bindemittel als zu vollständig ausgehärtetem Bindemittel aufweist. Die Haftschicht der Folie kann auch zum Haften an anderen Arten von Verunreinigungen angepasst sein.

Vorzugsweise ist die Haftschicht der Folie derart ausgestaltet, dass sie eine möglichst geringe Adhäsion zur Deckschicht aufweist. Dadurch lässt sich die Folie ohne Probleme nach dem Verpressen von der Oberfläche der Deckschicht entfernen, ohne dass Schäden an der Deckschicht auftreten. Lediglich Verunreinigungen sollen so an der Folie haften und entfernt werden.

Bevorzugt ist die Haftschicht der Folie derart ausgestaltet, dass sie eine möglichst geringe Adhäsion zu vollständig ausgehärtetem Bindemittel aufweist.

Bevorzugt berührt das Pressmittel beim Verpressen eine Oberseite der Folie. Dadurch wird verhindert, dass am Pressmittel anhaftende Verunreinigungen auf die Oberfläche der Deckschicht übertragen werden. Des Weiteren wird ausgeschlossen, dass Verunreinigungen aus der Umgebungsluft oder durch Produktionsprozesse verursachter Abrieb sich auf der Oberseite der Deckschicht ansammeln.

Das Anordnen der Dekorschicht auf dem Träger und das Anordnen der Folie auf der Deckschicht kann gleichzeitig, insbesondere beim Einbringen in die Presse, erfolgen. Im Falle des gleichzeitigen Anordnens beim Einbringen in die Presse können die Folie, die Dekorschicht und der Träger der Presse einzeln, insbesondere als Bahnenmaterial, zugeführt werden. Insbesondere haftet die Folie nicht vor dem Einbringen in die Presse an der Deckschicht.

Ein weiterer Aspekt der Erfindung betrifft die Verwendung einer Folie in einem Verfahren zur Herstellung eines Bauteils zur Reduktion von Verunreinigungen. Die Folie weist auf einer Seite, vorzugsweise ausschließlich auf einer Unterseite, eine Haftschicht auf. Die Folie wird derart auf dem Bauteil angeordnet, dass die Haftschicht der Folie mit dem Bauteil in Kontakt kommt. Danach wird die Folie mit dem Bauteil verpresst. Die Haftschicht haftet an Verunreinigungen, die in dem Herstellungsverfahren auf dem Bauteil auftreten. Die Folie wird nach dem Verpressen von dem Bauteil entfernt, so dass auf dem Bauteil befindliche Verunreinigungen mittels der Folie reduziert bzw. entfernt werden.

Durch Verwendung der Folie werden Verunreinigungen, die in dem Herstellungsverfahren auf dem Bauteil bzw. der Oberfläche der Deckschicht auftreten, reduziert. Die Folie wird insbesondere direkt nach dem Verpressen von dem Bauteil wieder entfernt und vorzugsweise als Bahnenmaterial wieder aufgerollt. Eine Wiederverwendung der Folie ist möglich.

Die Folie ist derart ausgestaltet, dass sie der Temperatur und dem Druck des Pressprozesses standhält, ohne dass die Haftschicht oder sonstige Eigenschaften der Folie beeinflusst werden. Als Grundmaterial für die Folie wird daher vorzugsweise Polyethylenterephthalat (PET) verwendet, wobei die Folie vorzugsweise eine Dicke zwischen 20 bis 80 µm, besonders bevorzugt zwischen 40 bis 60 µm, aufweist. Für den Fall, dass kontinuierliche Pressen eingesetzt werden, ist die Folie so ausgestaltet, dass sie der Zugspannung des Wickelprozesses standhält.

Vorzugsweise wird die Folie auf einer teilweise oder vollständig ausgehärteten Deckschicht des Bauteils (nicht auf eine flüssige Deckschicht) angeordnet.

In einer bevorzugten Ausführungsform weist die Folie eine Oberfläche auf, die derart ausgebildet ist, dass die Folie, insbesondere beim Verpressen und/oder vor dem Verpressen mit dem Bauteil, eine Oberseite bzw. Oberfläche des Bauteils, insbesondere einer Deckschicht des Bauteils, strukturmäßig im Wesentlichen unverändert lässt. Mit anderen Worten dient die Folie nicht als (maßgeblicher) Strukturgeber (haptisch und/oder optisch) für das Bauteil.

Vorzugsweise ist die Haftschicht der Folie derart ausgestaltet, dass sie eine stärkere Adhäsion zu auf dem Bauteil befindlichen Verunreinigungen als zu dem Bauteil aufweist. Somit lassen sich unkompliziert und ohne Beschädigungen des Bauteils Verunreinigungen von der Oberfläche des Bauteils entfernen.

Ganz besonders bevorzugt ist die Haftschicht der Folie derart ausgestaltet, dass sie eine stärkere Adhäsion zu auf der Deckschicht des Bauteils befindlichen, durch ein Bindemittel entstandenen Verunreinigungen als zu der Deckschicht aufweist.

Sehr bevorzugt ist die Haftschicht der Folie derart ausgestaltet, dass sie eine stärkere Adhäsion zu auf der Deckschicht des Bauteils befindlichem, unvollständig gehärtetem Bindemittel als zu vollständig ausgehärtetem Bindemittel aufweist. Die Haftschicht der Folie kann auch zum Haften an anderen Arten von Verunreinigungen angepasst sein.

Bevorzugt ist die Haftschicht der Folie derart ausgestaltet, dass sie eine möglichst geringe Adhäsion zu vollständig ausgehärtetem Bindemittel aufweist.

Bevorzugt wird beim Verpressen eine Oberseite der Folie berührt.

Weitere Vorteile, Merkmale, Eigenschaften und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: schematisch in einer Querschnittdarstellung eine bevorzugte Variante einer Dekorschicht für ein Bauteil,
- Fig. 2: schematisch in einer Querschnittdarstellung den Schichtaufbau einer bevorzugten Variante einer Pressanordnung zur erfindungsgemäßen Herstellung eines Bauteils,
- Fig. 3: schematisch in einer Seitenansicht das Verpressen einer ersten bevorzugten Variante einer Pressanordnung unter Bereitstellung einer ersten bevorzugten Variante der Dekorschicht aus Fig. 1 in einer kontinuierlichen Presse, die Pressmittel aufweist,
- Fig. 4: schematisch in einer Querschnittdarstellung den Schichtaufbau eines Bauteils als Resultat einer ersten bevorzugten Variante des erfindungsgemäßen Verfahrens,
- Fig. 5: schematisch in einer Querschnittdarstellung eine zweite bevorzugte Variante einer Dekorschicht und einer separaten Bindemittelschicht für ein Bauteil,
- Fig. 6: schematisch in einer Querschnittdarstellung den Schichtaufbau einer bevorzugten Variante einer Pressanordnung zur erfindungsgemäßen Herstellung eines Bauteils,
- Fig. 7: schematisch in einer Seitenansicht das Verpressen einer zweiten bevorzugten Variante einer Pressanordnung unter Bereitstellung einer zweiten bevorzugten Variante der Dekorschicht aus Fig. 5 in einer kontinuierlichen Presse, die Pressmittel aufweist,
- Fig. 8: schematisch in einer Querschnittdarstellung den Schichtaufbau eines Bauteils als Resultat einer zweiten bevorzugten Variante des erfindungsgemäßen Verfahrens,
- Fig. 9: schematisch in einer Querschnittdarstellung eine Folie und ein Bauteil vor dem Verpressen, wobei das Bauteil Verunreinigungen aufweist,
- Fig. 10: schematisch in einer Querschnittdarstellung die Folie und das Bauteil aus Fig. 9 nach dem Verpressen, wobei die Verunreinigungen an der Haftschicht der Folie haften.

Die Figuren zeigen lediglich schematische Darstellungen, bei denen die genauen Dimensionen oder Größenverhältnisse nicht berücksichtigt sind. Sie dienen nur zur Veranschaulichung, ohne Bezug zur tatsächlichen Größe der Objekte.

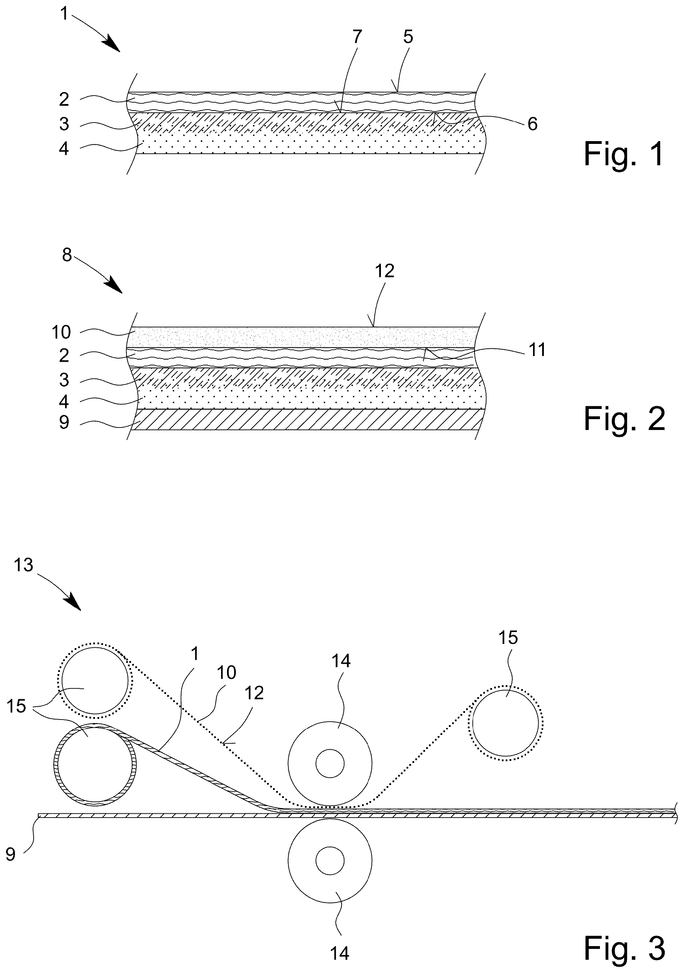

Das erfindungsgemäße Verfahren umfasst zwei Varianten. Im Folgenden wird zunächst auf die erste Variante eingegangen, die in den Fig. 1 bis 4 gezeigt ist.

Fig. 1 zeigt schematisch in einer Querschnittsanordnung eine bevorzugte Variante einer Dekorschicht 1. Die hier dargestellte Dekorschicht 1 weist eine Deckschicht 2 und eine dekorbildende Schicht 3 auf. Die dekorbildende Schicht 3 ist mit einem vorzugsweise harzhaltigem Bindemittel 4 versehen. Die oberste Schicht der Dekorschicht 1, nämlich die Deckschicht 2, bildet eine Oberfläche 5 der Dekorschicht 1, wobei eine Unterseite 6 der Deckschicht 2 an eine Oberseite 7 der dekorbildenden Schicht 3 angrenzt. Die Deckschicht 2 bildet vorzugsweise einen Lack. Der nicht klar abgegrenzte Übergang zwischen der dekorbildenden Schicht 3 und dem Bindemittel 4 rührt daher, dass die dekorbildende Schicht 3 mit dem Bindemittel 4 getränkt ist und das Bindemittel 4 in die dekorbildende Schicht 3 diffundiert. Nicht dargestellt, aber möglich ist es, dass auch der Übergang zwischen der Deckschicht 2 und der dekorbildenden Schicht 3 nicht klar abgegrenzt ist, beispielsweise weil ein Teil der Deckschicht 2 in die dekorbildende Schicht 3 diffundiert. Kombiniert ergeben diese Schichten (Deckschicht 2, dekorbildende Schicht 3 und Bindemittel 4) eine erste bevorzugte Variante einer Dekorschicht 1.

Die in Fig. 1 dargestellte Querschnittsanordnung wird vorzugsweise, um unter anderem eine kürzere Presszeit erzielen zu können, bereits vor dem Anordnen im Pressmittel und vor dem Anordnen einer Folie 10 auf der Deckschicht 2 ausgehärtet. Besonders bevorzugt ist die Deckschicht 2 vor dem Verpressen und vor dem Anordnen einer Folie 10 auf der Deckschicht 2 bereits teilweise oder vollständig ausgehärtet, und zwar so, dass die Deckschicht 2 eine visuell und/oder haptisch wahrnehmbare Struktur im Sinne der Erfindung aufweist (hier nicht dargestellt).

Im Gegensatz zur Deckschicht 2 ist das Bindemittel 4 vorzugsweise ebenfalls teilweise, allerdings besonders bevorzugt nicht vollständig, ausgehärtet.

Die dekorbildende Schicht 3 weist vorzugsweise ein farbig ausgestaltetes und/oder bedrucktes Bahnenmaterial auf oder besteht daraus und bestimmt im Wesentlichen die resultierende Oberflächen-Struktur der Dekorschicht 1.

Die in Fig. 1 dargestellte Querschnittsanordnung wird für das weitere Verfahren in Form eines Bahnmaterials - für die Verwendung einer kontinuierlichen Presse - oder als bereits geschnittene Bögen - für die Verwendung einer Etagen- oder Kurztaktpresse - bereitgestellt.

Fig. 2 zeigt eine Pressanordnung 8, wie sie in eine Presse eingebracht werden kann. Zur Herstellung einer solchen Pressanordnung wird die in Fig. 1 gezeigte Dekorschicht 1 mit dem Bindemittel 4 auf einem Träger 9 angeordnet, so dass das Bindemittel 4 mit dem Träger 9 in Kontakt kommt.

Zusätzlich ist zur Herstellung einer Pressanordnung 8 noch die Bereitstellung einer Folie 10 erforderlich. Die Folie 10 weist auf einer Seite, vorzugsweise ausschließlich auf einer Unterseite 11, eine Haftschicht im Sinne der vorliegenden Erfindung auf.

Die Folie 10 wird derart auf der Deckschicht 2 angeordnet, dass die eine Haftschicht aufweisende Seite der Folie 10, vorzugsweise die Unterseite 11, mit der Deckschicht 2 der in Fig. 1 dargestellten Dekorschicht 1 in Kontakt kommt. Die Folie 10 weist auf einer Seite eine Oberfläche auf, vorzugsweise auf der Unterseite 11 bzw. der Seite, mit der die Folie mit der Deckschicht 2 in Kontakt kommt, die derart ausgebildet ist, dass die Folie 10 vor dem und bei dem Verpressen der Pressanordnung 8 eine Oberseite der Deckschicht 2, also die Oberfläche 5, strukturmäßig im Wesentlichen unverändert lässt.

In anderen bevorzugten Ausführungsformen kann die Folie 10 allerdings auch eine Haftschicht ausschließlich oder zusätzlich auf der Oberseite 12 der Folie 10 aufweisen.

Die in den Zeichnungen nicht dargestellte Haftschicht der Folie 10 ist derart ausgestaltet, dass sie eine stärkere Adhäsion zu auf der Deckschicht 2 befindlichen Verunreinigungen, welche ebenfalls nicht in den Figuren 1 bis 4 dargestellt sind, als zu der Deckschicht 2 aufweist. Im Gegensatz dazu soll die Haftschicht der Folie 10 gleichzeitig eine möglichst geringe Adhäsion zur Deckschicht 2 selbst aufweisen.

Die in Fig. 2 dargestellte Pressanordnung 8 kann in eine kontinuierliche Presse 13, die Pressmittel 14 aufweist, wie sie in Fig. 3 gezeigt ist, eingebracht werden.

Fig. 3 zeigt schematisch in einer Seitenansicht das Verpressen einer ersten bevorzugten Variante der Pressanordnung 8 aus Fig. 2 in einer kontinuierlichen Presse 13 mit Pressmitteln 14. Vorliegend handelt es sich bei den Pressmitteln 14 um Pressbänder. Es kann allerdings zum Verpressen auch eine Kurztakt- oder Etagenpresse verwendet werden und dementsprechend kann es sich bei den Pressmitteln 14 um Pressbleche handeln. Das Bereitstellen der einzelnen Bestandteile der Pressanordnung 8 kann als Bahnenmaterial bzw. Rollenmaterial 15 geschehen, aber auch als bereits zugeschnittene Segmente. Insbesondere die Folie 10, die Dekorschicht 1 sowie der Träger 9 werden vorzugsweise als Rollenmaterial 15 bereitgestellt. Allerdings können diese Bestandteile auch anderweitig bereitgestellt werden.

Die einzelnen Bestandteile der Pressanordnung 8 werden wie in Fig. 2 dargestellt zusammengeführt bzw. angeordnet und in die Presse 13 eingebracht bzw. der Presse zugeführt. Die Anordnung der Bestandteile wie in Fig. 2 dargestellt entspricht dem Aufbau der Pressanordnung im Bereich der Pressmittel 14.

Im Bereich der Pressmittel 14 wird die Pressanordnung 8 durch das Pressmittel 14 unter Einwirkung von Druck und Wärmeenergie zu einem Bauteil 16 derart verpresst, dass die Folie 10 von der Deckschicht 2 lösbar ist. Beim Verpressen berührt eines der Pressmittel 14 eine Oberseite 12 der Folie 10. Ein weiteres Pressmittel 14 steht vorzugsweise mit der Unterseite des Trägers 9 in Kontakt.

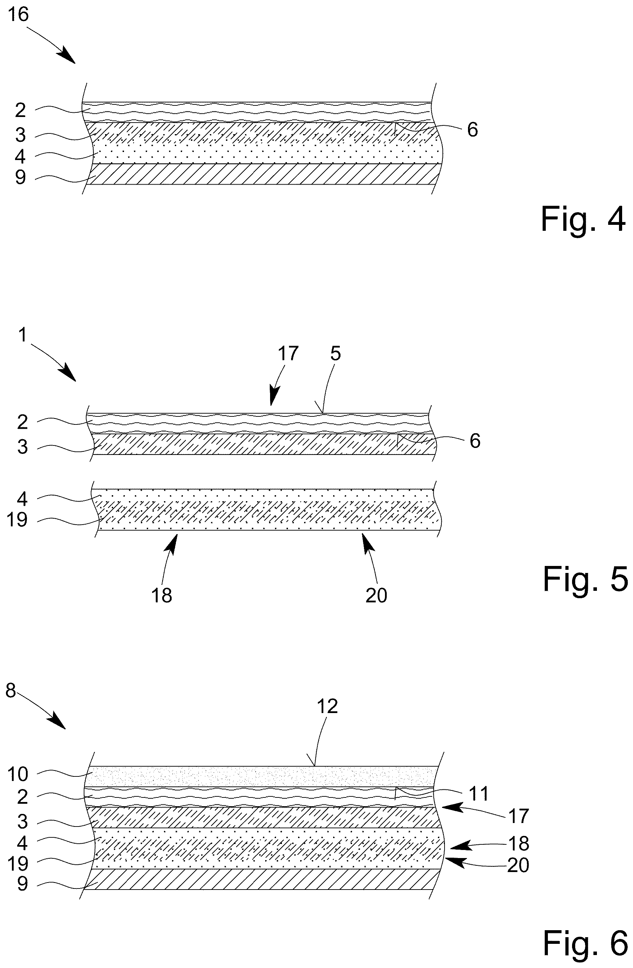

Nach dem Verpressen der Pressanordnung 8 wird die Folie 10 von der Deckschicht 2 entfernt zur Herstellung eines Bauteils 16. Die Folie 10 wird nach dem Verpressen wieder bevorzugt als Rollenmaterial aufgerollt, um - je nach Verschmutzungsgrad - wiederverwendet zu werden. Ein solches Bauteil 16 ist in Fig. 4 gezeigt.

Fig. 4 zeigt schematisch in einer Querschnittsanordnung den Schichtaufbau eines verpressten Bauteils 16. Durch Entfernung der Folie 10 von der Pressanordnung 8 werden die sich auf der Deckschicht 2 der Dekorschicht 1 befindlichen Verunreinigungen entfernt.

Durch das Verpressen der Pressanordnung 8 sind die einzelnen Schichten, also hier die Dekorschicht 1, aufweisend die Deckschicht 2 und die mit dem Bindemittel 4 versehene dekorbildende Schicht 3, und der Träger 9 durch das vorzugsweise wärmehärtende Bindemittel miteinander verbunden. Die Haftschicht der Folie 10 ist derart ausgebildet, dass sie sich trotz des Verpressens ohne Rückstände oder Schäden an der Deckschicht 2 von eben dieser entfernen lässt.

Im Folgenden wird auf die zweite Variante des Verfahrens eingegangen. Diese zweite bevorzugte Variante des Verfahrens ist in den Fig. 5 bis 8 gezeigt.

Fig. 5 zeigt in einer schematischen Querschnittsanordnung eine weitere bevorzugte Variante einer Dekorschicht 1. In dieser Variante weist die Dekorschicht 1 im Wesentlichen vier Schichten auf, wobei die Schichten in zwei Segmenten angeordnet sind.

Ein erstes Segment 17 weist eine Deckschicht 2 und eine dekorbildende Schicht 3 auf, wobei die Deckschicht 2 erneut eine Oberfläche 5 der Dekorschicht 1 ausbildet. Eine Unterseite 6 der Deckschicht 2 grenzt auch in dieser bevorzugten Variante der Dekorschicht 1 an eine dekorbildende Schicht 3 an. Allerdings ist die an die Deckschicht 2 angrenzende dekorbildende Schicht 3 nicht mit einem Bindemittel 4, wie in der Variante aus Fig. 1, versehen. Die Deckschicht 2 bildet vorzugsweise einen Lack.

Ein zweites Segment 18 weist einen mit Bindemittel 4 getränkten Bindemittelträger 19 auf. Dieses Segment 18 kann auch als separate Bindemittelschicht 20 bezeichnet werden.

Die Segmente 17 und 18 sind voneinander beabstandet dargestellt, um zu verdeutlichen, dass diese als getrennte Zwischenprodukte in den Pressprozess bzw. in das Verfahren eingebracht werden können.

Die in Fig. 5 dargestellte Querschnittsanordnung wird vorzugsweise, um unter anderem eine kürzere Presszeit erzielen zu können, bereits vor dem Anordnen in der Presse 13 und vor dem Anordnen der Folie 10 auf der Deckschicht 2 ausgehärtet. Besonders bevorzugt ist die Deckschicht 2 des ersten Segments 17 vor dem Verpressen und vor dem Anordnen der Folie 10 auf der Deckschicht 2 bereits teilweise oder vollständig ausgehärtet, so dass die Deckschicht 2 eine visuell und/oder haptisch wahrnehmbare Struktur im Sinne der Erfindung aufweist (hier nicht dargestellt).

Im Gegensatz zur Deckschicht 2 des ersten Segments 17 ist das Bindemittel 4 des zweiten Segments 18 vorzugsweise ebenfalls teilweise, allerdings besonders bevorzugt nicht vollständig bzw. unvollständig, ausgehärtet.

Die dekorbildende Schicht 3 weist vorzugsweise ein farbig ausgestaltetes und/oder bedrucktes Bahnenmaterial auf oder besteht daraus und bestimmt im Wesentlichen die resultierende Oberflächen-Struktur der Dekorschicht 1.

Die in Fig. 5 dargestellte Querschnittsanordnung wird für das weitere Verfahren in Form eines Bahnmaterials - für die Verwendung einer kontinuierlichen Presse - oder als bereits geschnittene Bögen - für die Verwendung einer Etagen- oder Kurztaktpresse - bereitgestellt.

Fig. 6 zeigt eine Pressanordnung 8, wie sie in eine Presse eingebracht werden kann. Zur Herstellung einer solchen Pressanordnung 8 wird die in Fig. 5 gezeigte Anordnung aufweisend das erste Segment 17 und das zweite Segment 18 auf einem Träger 9 angeordnet. Die separate Bindemittelschicht 20 bzw. das zweite Segment 18 wird auf dem Träger 9 angeordnet und anschließend die Dekorschicht 1 bzw. das erste Segment 17 auf der Bindemittelschicht 20 angeordnet.

Schließlich ist zur Herstellung der Pressanordnung 8 noch die Bereitstellung und Anordnung einer Folie 10 erforderlich. Die Folie 10 weist auf einer Seite, vorzugsweise ausschließlich auf einer Unterseite 11, eine Haftschicht im Sinne der vorliegenden Erfindung auf.

Die Folie 10 wird derart auf der Deckschicht 2 angeordnet, dass die eine Haftschicht aufweisende Seite der Folie 10, vorzugsweise die Unterseite 11, mit der Deckschicht 2 der in Fig. 5 dargestellten Dekorschicht 1 in Kontakt kommt. Die Folie 10 weist auf einer Seite eine Oberfläche auf, vorzugsweise auf der Unterseite 11 bzw. der Seite, mit der die Folie mit der Deckschicht 2 in Kontakt kommt, die derart ausgebildet ist, dass die Folie 10 beim Verpressen der Pressanordnung 8 eine Oberseite der Deckschicht 2, also die Oberfläche 5, strukturmäßig im Wesentlichen unverändert lässt.

In anderen bevorzugten Ausführungsformen kann die Folie 10 allerdings auch eine Haftschicht ausschließlich oder zusätzlich auf der Oberseite 12 der Folie 10 aufweisen.

Die in den Zeichnungen nicht dargestellte Haftschicht der Folie 10 ist derart ausgestaltet, dass sie eine stärkere Adhäsion zu auf der Deckschicht 2 im Sinne der vorliegenden Erfindung befindlichen Verunreinigungen, welche ebenfalls nicht in den Figuren 5 bis 8 dargestellt sind, als zu der Deckschicht 2 aufweist. Im Gegensatz dazu soll die Haftschicht der Folie 10 gleichzeitig eine möglichst geringe Adhäsion zur Deckschicht 2 selber aufweisen.

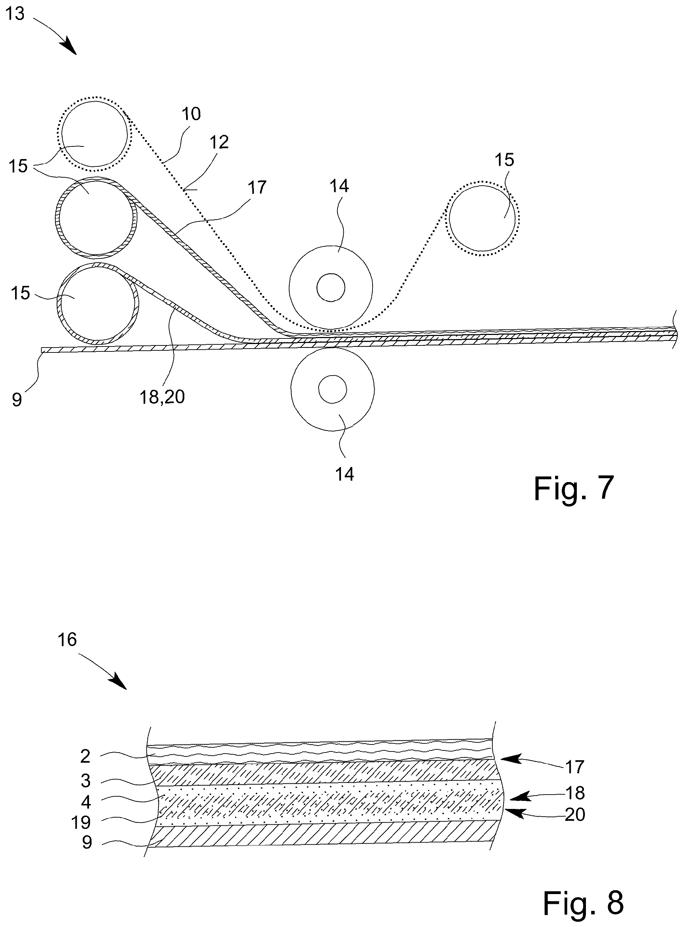

Die in Fig. 6 dargestellte Pressanordnung 8 kann in eine kontinuierliche Presse 13, die Pressmittel 14 aufweist, wie sie in Fig. 7 gezeigt ist, eingebracht werden.

Fig. 7 zeigt schematisch in einer Seitenansicht das Verpressen einer zweiten bevorzugten Variante der Pressanordnung 8 aus Fig. 6 in einer kontinuierlichen Presse 13 mit Pressmitteln 14. Vorliegend handelt es sich bei den Pressmitteln 14 um Pressbänder. Es kann allerdings zum Verpressen auch eine Kurztakt- oder Etagenpresse verwendet werden und dementsprechend kann es sich bei den Pressmitteln 14 um Pressbleche handeln. Das Bereitstellen der einzelnen Bestandteile der Pressanordnung 8 kann als Bahnenmaterial bzw. Rollenmaterial 15 geschehen, aber auch als bereits zugeschnittene Segmente. Insbesondere die Folie 10, die Dekorschicht 1 - aufweisend das erste Segment 17, also die Deckschicht 2 und die dekorbildende Schicht 3, sowie das zweite Segment 18 bzw. die separate Bindemittelschicht 20 - sowie der Träger 9 wird vorzugsweise als Rollenmaterial 15 bereitgestellt, allerdings können diese Bestandteile auch anderweitig bereitgestellt werden.

Die einzelnen Bestandteile der Pressanordnung 8 werden wie in Fig. 6 dargestellt zusammengeführt bzw. angeordnet und in die Presse 13 eingebracht. Die Anordnung der Bestandteile wie in Fig. 6 dargestellt entspricht dem Aufbau der Pressanordnung im Bereich der Pressmittel 14.

Im Bereich der Pressmittel 14 wird die Pressanordnung 8 durch die Pressmittel 14 unter Einwirkung von Druck und Wärmeenergie zu einem Bauteil 16 derart verpresst, dass die Folie 10 von der Deckschicht 2 lösbar ist. Beim Verpressen berührt eines der Pressmittel 14 eine Oberseite 12 der Folie 10. Ein weiteres Pressmittel 14 steht vorzugsweise mit der Unterseite des Trägers 9 in Kontakt.

Nach dem Verpressen der Pressanordnung 8 wird die Folie 10 von der Deckschicht 2 entfernt zur Herstellung eines Bauteils 16. Die Folie 10 wird nach dem Verpressen wieder bevorzugt als Rollenmaterial aufgerollt, um - je nach Verschmutzungsgrad - wiederverwendet zu werden. Ein solches Bauteil 16 ist in Fig. 8 gezeigt.

Fig. 8 zeigt schematisch in einer Querschnittsanordnung den Schichtaufbau eines verpressten Bauteils 16. Durch Entfernung der Folie 10 von der Pressanordnung 8 werden die sich auf der Deckschicht 2 der Dekorschicht 1 befindlichen Verunreinigungen entfernt.

Durch das Verpressen der Pressanordnung 8 sind die einzelnen Schichten, also hier die Dekorschicht 1, aufweisend eine Deckschicht 2, eine dekorbildende Schicht 3 sowie eine separate Bindemittelschicht 20 und der Träger 9 durch das vorzugsweise wärmehärtende Bindemittel miteinander verbunden. Die Haftschicht der Folie 10 ist derart ausgebildet, dass sie sich trotz des Verpressens ohne Rückstände oder Schäden an der Deckschicht 2 von eben dieser entfernen lässt.

Für beide Varianten des Verfahrens gelten vergleichbare Anforderungen an die Temperatur und den Druck während des Pressprozesses. Bevorzugt liegt die Temperatur im Bereich von 100° Celsius bis 250° Celsius, besonders bevorzugt zwischen 120° Celsius bis 200° Celsius. Der Druck beträgt vorzugsweise zwischen 20 bar und 120 bar, besonders bevorzugt zwischen 30 und 100 bar.

Die Bauteile, die nicht über eine kontinuierliche Presse hergestellt werden, weisen eine übliche Breite von 1,30 m oder 2,10 m auf. Die Länge beträgt üblicherweise 4,10 m, 5,60 m oder jeweils die Hälfte der genannten Längen.

Ein weiterer Aspekt der Erfindung betrifft die Verwendung einer erfindungsgemäßen Folie in einem Verfahren zur Herstellung eines Bauteils zur Reduktion von Verunreinigungen.

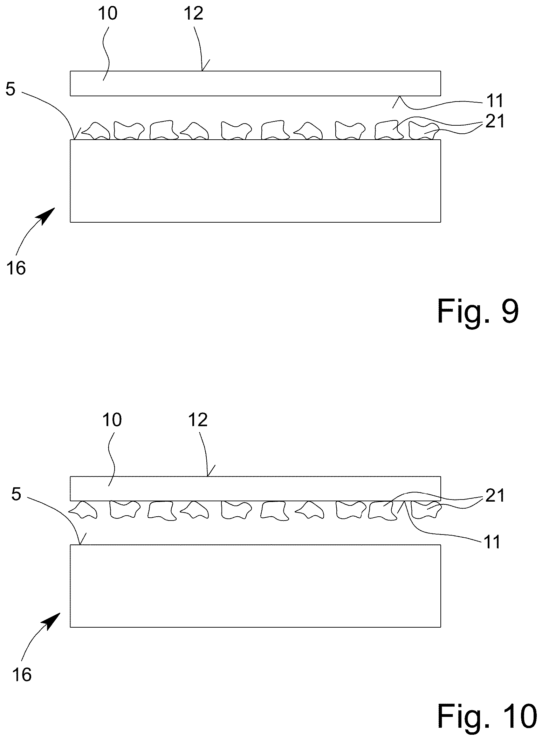

Fig. 9 zeigt schematisch in einer Querschnittdarstellung ein Bauteil 16, welches eine durch Verunreinigungen 21 verschmutzte Oberfläche 5 aufweist. Bei den Verunreinigungen 21 handelt es sich um Verunreinigungen im Sinne der vorliegenden Erfindung. Eine Folie 10 ist beabstandet von der Oberfläche 5 angeordnet, um zu verdeutlichen, dass die Folie 10 bzw. eine eine Haftschicht aufweisende Unterseite 11 der Folie 10 noch nicht mit dem Bauteil 16 verpresst ist bzw. in Kontakt gekommen ist.

Die Folie 10 wird derart angeordnet, dass eine Haftschicht der Folie 10 mit dem Bauteil 16 in Kontakt kommt. Dann wird die Folie 10 mit dem Bauteil 16 in einer Presse verpresst wird.

Die Haftschicht der Folie 10 haftet dann an Verunreinigungen 21, die in dem Herstellungsverfahren auf dem Bauteil 16 auftreten, wobei die Haftschicht der Folie 10 so ausgestaltet ist, dass sie eine stärkere Adhäsion zu auf dem Bauteil 16 befindlichen Verunreinigungen 21 als zu dem Bauteil 16 selber aufweist.

Fig. 10 zeigt den Zustand nach dem Verpressen und der Entfernung der Folie 10 von dem Bauteil 16 in einer schematischen Querschnittsdarstellung. Die Verunreinigungen 21, die sich vor dem Verpressen noch auf der Oberfläche 5 des Bauteils 16 befunden haben (Fig. 9), haften nun an der Haftschicht der Folie 10 (Fig. 10). Dadurch lässt sich eine Reduktion der Verunreinigungen 21 erzielen. Je nach Verschmutzungsgrad kann die Folie 10 erneut als Rollenmaterial aufgerollt und wiederverwendet werden.

### Bezugszeichenliste:

- 1: Dekorschicht
- 2: Deckschicht von 1
- 3: Dekorbildende Schicht von 1
- 4: Bindemittel
- 5: Oberfläche von 1
- 6: Unterseite von 2
- 7: Oberseite von 3
- 8: Pressanordnung
- 9: Träger
- 10: Folie
- 11: Unterseite von 10
- 12: Oberseite von 10
- 13: Kontinuierliche Presse
- 14: Pressmittel
- 15: Rollenmaterial
- 16: Bauteil
- 17: Erstes Segment
- 18: Zweites Segment
- 19: Bindemittelträger
- 20: Bindemittelschicht
- 21: Verunreinigung

## Patentansprüche

1. Verfahren zur Herstellung eines Bauteils (16), vorzugsweise einer Dekorplatte, umfassend die Schritte:
- Bereitstellen eines Trägers (9);
- Bereitstellen einer Dekorschicht (1), wobei die Dekorschicht (1) eine Deckschicht (2) und eine dekorbildende Schicht (3) aufweist;
- Bereitstellen einer Folie (10), wobei die Folie (10) auf einer Seite, vorzugsweise ausschließlich auf einer Unterseite (11), eine Haftschicht aufweist;
- Anordnen der Dekorschicht (1) auf dem Träger (9) unter Einsatz eines Bindemittels (4);
- Anordnen der Folie (10) auf der Deckschicht (2) derart, dass die Haftschicht der Folie (10) mit der Deckschicht (2) der Dekorschicht (1) in Kontakt kommt, zur Herstellung einer Pressanordnung (8);
- Einbringen dieser Pressanordnung (8) in eine Presse (13), die ein Pressmittel (14) aufweist;
- Verpressen dieser Pressanordnung (8) durch das Pressmittel (14) unter Einwirkung von Druck und Wärmeenergie zu einem Bauteil (16) derart, dass die Folie (10) von der Deckschicht (2) lösbar ist;
- Entfernen der Folie (10) von der Deckschicht (2), so dass auf der Oberfläche der Deckschicht (2) befindliche Verunreinigungen mittels der Folie (10) reduziert bzw. entfernt werden.

2. Verfahren nach Anspruch 1, wobei die Haftschicht eine physische Zwischenschicht in Form einer Klebstoff-Schicht ist.

3. Verfahren nach Anspruch 1, wobei die Haftschicht eine durch ein Ätzverfahren behandelte Oberfläche ist, die die Bindungseigenschaften verändert.

4. Verfahren nach einem der Ansprüche 1 bis 3, wobei die Verunreinigungen durch das Bindemittel (4) entstanden sind.

5. Verfahren nach einem der Ansprüche 1 bis 4, wobei die Folie (10) nach dem Verpressen aufgerollt wird, um wiederverwendet zu werden.

6. Verfahren nach Anspruch 1, wobei die dekorbildende Schicht (3) mit dem Bindemittel (4) versehen ist und die Dekorschicht (1) auf dem Träger (9) derart angeordnet wird, dass das Bindemittel (4) mit dem Träger (9) in Kontakt kommt.

7. Verfahren nach Anspruch 1, wobei eine separate Bindemittelschicht (20) mit dem Bindemittel (4) und einem Bindemittelträger (19) bereitgestellt wird und die Dekorschicht (1) auf dem Träger (9) derart angeordnet wird, dass die separate Bindemittelschicht (20) auf dem Träger (9) und die Dekorschicht (1) auf der separaten Bindemittelschicht (20) angeordnet werden.

8. Verfahren nach einem der Ansprüche 1 bis 7, wobei die Deckschicht (2) vor dem Verpressen und vor dem Anordnen der Folie (10) auf der Deckschicht (2) teilweise oder vollständig ausgehärtet ist.

9. Verfahren nach einem der Ansprüche 1 bis 8, wobei die Deckschicht (2) vor dem Anordnen der Folie (10) auf der Deckschicht (2) und vor dem Verpressen eine Oberfläche mit einer visuell und/oder haptisch wahrnehmbaren Struktur aufweist.

10. Verfahren nach einem der Ansprüche 1 bis 9, wobei die Folie (10) eine Oberfläche aufweist, die derart ausgebildet ist, dass die Folie (10) eine Oberseite der Deckschicht (2) strukturmäßig im Wesentlichen unverändert lässt.

11. Verfahren nach einem der Ansprüche 1 bis 10, wobei die Haftschicht der Folie (10) derart ausgestaltet ist, dass sie eine stärkere Adhäsion zu einer auf der Deckschicht (2) befindlichen Verunreinigung (21) als zu der Deckschicht (2) aufweist.

12. Verwendung einer Folie (10) in einem Verfahren zur Herstellung eines Bauteils (16), vorzugsweise einer Dekorplatte, zur Reduktion von Verunreinigungen (21), wobei die Folie (10) auf einer Seite, vorzugsweise ausschließlich auf einer Unterseite (11), eine Haftschicht aufweist,
wobei die Folie (10) auf dem Bauteil (16) derart angeordnet wird, dass die Haftschicht der Folie (10) mit dem Bauteil (16) in Kontakt kommt, und mit dem Bauteil (16) verpresst wird,
wobei die Haftschicht an Verunreinigungen (21), die in dem Herstellungsverfahren auf dem Bauteil (16) auftreten, haftet,
wobei die Folie (10) nach dem Verpressen von dem Bauteil (16) entfernt wird, so dass auf dem Bauteil (16) befindliche Verunreinigungen mittels der Folie (10) reduziert bzw. entfernt werden.

13. Verwendung einer Folie (10) nach Anspruch 12, wobei die Folie (10) eine Oberfläche aufweist, die derart ausgebildet ist, dass die Folie (10) eine Oberseite der Deckschicht (2) strukturmäßig im Wesentlichen unverändert lässt.

14. Verwendung einer Folie (10) nach Anspruch 12 oder 13, wobei die Haftschicht der Folie (10) derart ausgestaltet ist, dass sie eine stärkere Adhäsion zu auf dem Bauteil (16) befindlichen Verunreinigungen (21) als zu dem Bauteil (16) aufweist.

15. Verwendung einer Folie (10) nach einem der Ansprüche 12 bis 14, wobei die Haftschicht eine physische Zwischenschicht in Form einer Klebstoff-Schicht ist oder wobei die Haftschicht eine durch ein Ätzverfahren behandelte Oberfläche ist, die die Bindungseigenschaften verändert.

16. Verwendung einer Folie (10) nach einem der Ansprüche 12 bis 15, wobei die Verunreinigungen durch ein Bindemittel (4) des Bauteils (16) entstanden sind.
